# FASCICULE DE BREVET EUROPEEN

(11) **EP 0 974 422 B1**
(45) Date de publication et mention de la délivrance du brevet: **18.09.2002**
(21) Numéro de dépôt: 99401795.2
(22) Date de dépôt: 16.07.1999
(51) Int. Cl.: B24B 13/01, B24B 45/00, B23Q 7/04, B23Q 3/155

(54) **Outil de finissage, notamment pour lentille ophtalmique, et équipements propres à sa mise en oeuvre**
Endbearbeitungswerkzeug, insbesondere für ophtalmische Linse, und Einrichtung zur Verwendung desselben
Finishing tool, especially for ophtalmic lens, and equipment for using the same

(30) Priorité: 20.07.1998 FR 9809209
(43) Date de publication de la demande: 26.01.2000
(73) Titulaire: ESSILOR INTERNATIONAL (Compagnie Générale d'Optique), F-94220 Charenton-le-Pont (FR)
(72) Inventeur: Cailloux, Jean-François, 93340 Le Raincy (FR); Freson, David, 80200 Estrees-Deniecourt (FR)
(74) Mandataire: CABINET BONNET-THIRION

(56) Documents cités:
- DE-U- 9 416 005
- US-A- 2 444 760
- US-A- 3 683 567
- US-A- 3 962 777
- US-A- 5 157 873
- US-A- 5 220 749

## Description

La présente invention concerne d'une manière générale le finissage d'articles semi-finis.

Elle vise plus particulièrement, mais non nécessairement exclusivement, le cas où ces articles sont des lentilles ophtalmiques, plus communément appelées verres, à monter sur des montures de lunettes.

Ainsi qu'on le sait, la réalisation de tels verres se fait usuellement en deux temps.

Dans un premier temps, il est procédé à la réalisation de verres semi-finis correspondant, par exemple, à des corrections, notamment en puissance, bien déterminées.

Dans un deuxième temps, il est procédé, à la demande, à un finissage de ces verres, en assurant, au coup par coup, par une reprise d'usinage, l'ajustement de corrections nécessaires pour satisfaire à la prescription requise, tant en ce qui concerne la puissance qu'en ce qui concerne éventuellement d'autres types de correction, tels que, par exemple, la réalisation d'un cylindre si le porteur concerné est astigmate.

La reprise d'usinage correspondante implique, traditionnellement, le passage des verres de l'un à l'autre de plusieurs postes de traitement, à savoir, par exemple, au moins un poste d'ébauchage, au moins un poste de doucissage, et au moins un poste de polissage, avec, à chaque fois, la mise en oeuvre d'un outil de finissage spécifique approprié dont le grain est de plus en plus fin.

Bien que le terme de finissage soit plus communément appliqué au doucissage et au polissage, il doit être entendu ici comme pouvant aussi bien couvrir l'ébauchage, les conditions d'intervention étant de toute façon de même type dans tous les autres cas.

En effet, quel que soit le poste de traitement concerné, l'outil de finissage correspondant comporte, usuellement, d'une part, un bloc de travail, qui présente, globalement, une surface inférieure, une surface latérale et une surface supérieure, et, d'autre part, un embout, qui, solidaire du bloc de travail, fait saillie sur la surface supérieure de celui-ci, en retrait par rapport à sa surface latérale.

La surface inférieure du bloc de travail est en pratique la surface de travail utile, et il peut s'agir d'une surface concave ou d'une surface convexe suivant la nature du verre semi-fini à travailler.

Quant à l'embout, qui, dans ce qui suit, sera appelé, par simple commodité, embout de support, il est destiné à permettre l'adaptation de l'outil de finissage à un dispositif d'entraînement propre à en assurer l'entraînement en rotation.

A ce jour, cet embout de support est, extérieurement, globalement cylindrique.

Cela est le cas, par exemple, dans la demande de brevet allemand publié sous le No 30 21 244 et dans les brevets français publiés sous les Nos 2 612 823 et 2 654 027.

US 5 220 749 A décrit un outil pour l'usinage d'un prisme optique dont l'embout de support comporte à son extrémité un téton dont la paroi latérale forme une gorge propre à coopérer avec un mécanisme de maintien et d'éjection double effet prévu dans la broche rotative d'un dispositif d'entraînement de cet outil, l'appareil décrit comportant, outre le dispositif d'entraînement, un changeur d'outil comportant, un disque rotatif permettant de loger plusieurs outils et un bras d'échange pourvu d'un mécanisme de préhension formé par un mandrin à expansion propre à coopérer avec un trou borgne prévu dans l'embout de support à l'opposé du téton.

Le problème, commun à l'ensemble des postes de traitement concernés, est qu'il faut, à chaque fois, choisir, parmi d'autres, l'outil de finissage effectivement à mettre en oeuvre.

La présente invention a d'une manière générale pour objet des dispositions de nature à faciliter avantageusement une automatisation de l'opération correspondante si désiré.

De manière plus précise, elle a tout d'abord pour objet un outil de finissage, notamment pour lentille ophtalmique, du genre comportant, d'une part, un bloc de travail, qui présente, globalement, une surface inférieure, une surface latérale, et une surface supérieure, et, d'autre part, un embout de support, qui, solidaire du bloc de travail, fait saillie sur la surface supérieure de celui-ci, en retrait par rapport à sa surface latérale, cet outil de finissage étant d'une manière générale caractérisé en ce que l'embout de support comporte des moyens d'intervention propres à permettre la suspension de l'ensemble ou sa suspension et son attelage à un quelconque équipement, et en ce que ces moyens d'intervention sont constitués par deux ergots, qui, disposés en positions diamétralement opposées l'un par rapport à l'autre, font saillie sur la surface latérale de l'embout de support.

Grâce à ces ergots, qui n'interviennent alors que pour sa suspension, l'outil de finissage suivant l'invention peut avantageusement être suspendu, avec d'autres, dans un râtelier de stockage, où un dispositif de transfert, dûment piloté en conséquence, peut venir le saisir, pour l'emmener ensuite au poste de traitement correspondant.

La présente invention a encore pour objets des dispositifs comportant un outil tel qu'exposé ci-dessous et un équipement propre à la mise en oeuvre de cet outil de finissage, respectivement un tel râtelier de stockage, un tel dispositif de transfert, et un dispositif d'entraînement.

S'agissant du râtelier de stockage, il comporte, en porte à faux, au moins un flasque, ce flasque présentant au moins une échancrure dont les bords latéraux sont écartés l'un de l'autre d'une distance qui, au moins localement, est, d'une part, inférieure à la distance séparant l'une de l'autre les extrémités des ergots de l'embout de support de l'outil de finissage, et, d'autre part, supérieure à la dimension transversale correspondante de cet embout de support.

Ainsi, l'outil de finissage est engagé par son embout de support dans cette échancrure, et, par les ergots de celui-ci, il repose par simple gravité sur le flasque correspondant, de part et d'autre de cette échancrure.

La surface inférieure de l'outil de finissage, qui, tel que déjà souligné ci-dessus, est en pratique la surface de travail utile de celui-ci, est alors avantageusement tournée vers le bas, ce qui minimise les risques de son encrassement par un éventuel dépôt de poussière.

Corollairement, s'agissant du dispositif de transfert, il comporte deux doigts par lesquels il est propre à la saisie de l'outil de finissage dans un tel râtelier de stockage.

Préférentiellement, ces deux doigts sont pour ce faire montés mobiles l'un par rapport à l'autre, par exemple en translation.

S'agissant du dispositif d'entraînement, il comporte une broche montée rotative, et, également, une tige d'attelage, qui, disposée coaxialement dans la broche, à la faveur d'un alésage axial de celle-ci, est montée mobile dans cette broche, et qui est équipée, à son extrémité libre, de moyens d'intervention complémentaires des moyens d'intervention que comporte l'embout de support de l'outil de finissage.

Par exemple, lorsque ces derniers sont constitués par des ergots, les moyens d'intervention équipant la tige d'attelage sont eux-mêmes constitués par une pièce d'attelage, en forme de cloche, par laquelle cette tige d'attelage est adaptée à être engagée sur l'embout de support d'un tel outil de finissage, et qui présente, latéralement, des rainures en baïonnette pour coopération avec les ergots que comporte celui-ci.

Ainsi, il est avantageusement tiré un parti supplémentaire de ces ergots, en sus de la suspension qu'ils assurent dans un râtelier de stockage, ces ergots intervenant alors pour l'attelage à un dispositif d'entraînement.

Les objets de l'invention, ainsi que leurs caractéristiques et leurs avantages, ressortiront d'ailleurs de la description qui va suivre, à titre d'exemple, en référence aux dessins schématiques annexés sur lesquels :
la figure 1 est une vue en perspective d'un outil de finissage suivant l'invention ;
la figure 2 en est une vue en coupe axiale, suivant la ligne II-II de la figure 1 ;
la figure 3 en est, avec des arrachements locaux, et de manière en partie éclatée, une vue latérale, suivant la flèche III de la figure 2 ;
la figure 4 en est une vue de dessus, suivant la flèche IV de la figure 2 ;
la figure 5 est une vue en plan d'un îlot de traitement comportant divers équipements propres à la mise en oeuvre d'un tel coutil de finissage ;
la figure 6 reprend, à échelle supérieure, le détail de la figure 5 repéré par un encart VI sur cette figure 5 ;
la figure 7 est une vue de bout de l'équipement représenté sur la figure 6, suivant la flèche VII de cette figure 6 ;
la figure 8 est une vue partielle en perspective de cet équipement, avec un outil de finissage prêt à être mis en place dans celui-ci ;
la figure 9 est une vue latérale partielle d'un autre équipement propre à la mise en oeuvre d'un outil de finissage suivant l'invention ;
la figure 10 est, avec des arrachements locaux, une vue de dessus de cet autre équipement, suivant la flèche X de la figure 9 ;
la figure 11 est une vue en coupe axiale d'un autre équipement propre à la mise en oeuvre d'un outil de finissage suivant l'invention, avec un tel outil de finissage disposé en bout de la broche qu'il comporte ;
la figure 12 est une autre vue partielle en coupe axiale de l'ensemble, suivant la ligne XII-XII de la figure 11;
la figure 13 en est une autre vue partielle en coupe, suivant la ligne XIII-XIII de la figure 11 ;
la figure 14 en est une autre vue partielle en coupe, suivant la ligne XIV-XIV de la figure 12 ;
la figure 15 est une vue latérale partielle de cet ensemble montrant plus particulièrement le montage à baïonnette intervenant entre la broche de cet autre équipement et l'outil de finissage.

Tel qu'illustré sur ces figures, et de manière connue en soi, l'outil de finissage 10 suivant l'invention comporte, d'une part, un bloc de travail 11, qui présente, globalement, une surface inférieure 12, une surface latérale 13, et une surface supérieure 14, et, d'autre part, un embout de support 15, qui, solidaire du bloc de travail 11, fait saillie sur la surface supérieure 14 de celui-ci, en retrait par rapport à sa surface latérale 13.

Dans la forme de réalisation représentée, l'embout de support 15 est d'un seul tenant avec le bloc de travail 11, et il est coaxial de celui-ci.

Soit A₁ l'axe de l'ensemble.

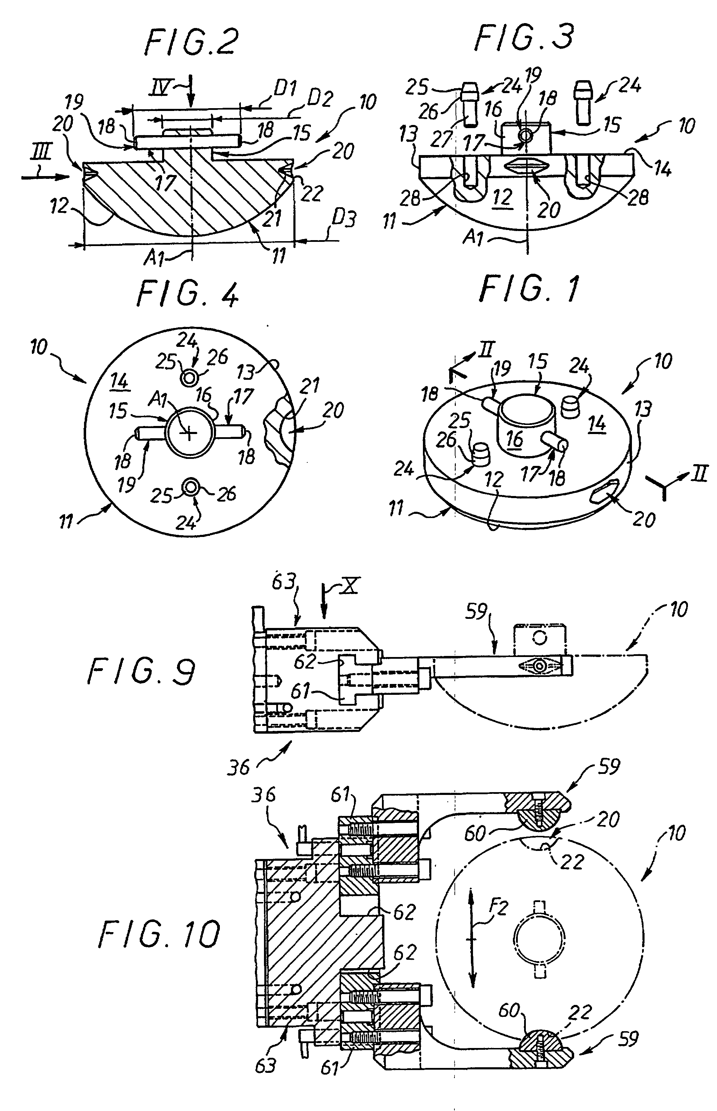

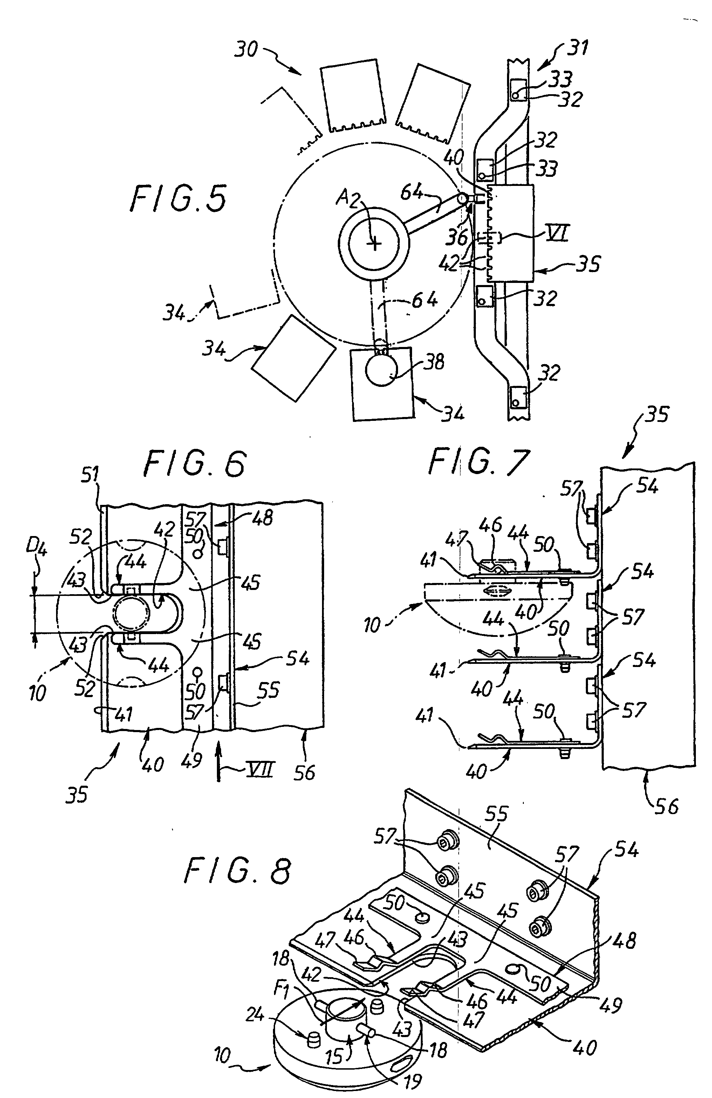

Cet axe A₁ est schématisé en traits interrompus sur les figures 2 et 3, et il est repéré par sa trace sur la figure 4.

Dans la forme de réalisation représentée, la surface inférieure 12 du bloc de travail 11, qui est la surface de travail utile de ce bloc de travail 11, est convexe.

Il s'agit, par exemple, d'une surface sphérique d'axe A₁.

Corollairement, la surface latérale 13 du bloc de travail 11 est, dans la forme de réalisation représentée, une surface cylindrique d'axe A₁ et de section transversale circulaire.

La surface supérieure 14 du bloc de travail 11 est, quant à elle, une surface plane, et elle s'étend sensiblement perpendiculairement à l'axe A₁.

Enfin, dans la forme de réalisation représentée, la surface latérale 16 de l'embout de support 15 est elle-même une surface cylindrique d'axe A₁ et de section transversale circulaire.

Il résulte de ce qui précède que, dans la forme de réalisation représentée, l'outil de finissage 10 suivant l'invention a une configuration générale de révolution.

Les dispositions correspondantes ne relèvent pas d'ailleurs de la présente invention, et elles ne seront donc pas décrites plus en détail ici.

Il en sera de même en ce qui concerne la nature même de cet outil de finissage 10, et, notamment, en ce qui concerne le grain de la surface inférieure 12 de son bloc de travail 11.

Suivant l'invention, l'embout de support 15 comporte des moyens d'intervention 17 propres à permettre la suspension de l'ensemble et/ou son attelage à un quelconque équipement.

Dans la forme de réalisation représentée, ces moyens d'intervention 17 sont constitués par deux ergots 18, qui, disposés en positions diamétralement opposées l'un par rapport à l'autre, font saillie sur la surface latérale 16 de l'embout de support 15, à distance de la surface supérieure 14 du bloc de travail 11.

Dans la forme de réalisation représentée, et ainsi qu'il est mieux visible sur la figure 2, ces deux ergots 18 sont formés par les extrémités d'une goupille 19 qui traverse de part en part l'embout de support 15.

Dans la forme de réalisation représentée, cette goupille 19 a une section transversale circulaire.

En pratique, les ergots 18 qu'elle forme ont l'un et l'autre une même longueur.

Soit D₁ la distance séparant l'une de l'autre les extrémités de ces ergots 18.

Par nature, cette distance D₁ est supérieure à la dimension transversale D₂ correspondante de l'embout de support 15, c'est-à-dire au diamètre de la surface latérale 16 de celui-ci.

Dans la forme de réalisation représentée, la distance D₁ est, conjointement, inférieure à la dimension transversale D₃ correspondante du bloc de travail 11, c'est-à-dire au diamètre de la surface latérale 13 de ce bloc de travail 11.

Autrement dit, dans la forme de réalisation représentée, les ergots 18 que comporte l'embout de support 15 sont en retrait par rapport à la surface latérale 13 du bloc de travail 11.

Dans la forme de réalisation représentée, l'outil de finissage 10 comporte, par ailleurs, en creux sur la surface latérale 13 de son bloc de travail 11, et en positions diamétralement opposées l'une par rapport à l'autre, deux encoches 20, dites ci-après, par simple commodité, encoches de préhension.

Préférentiellement, et cela est le cas dans la forme de réalisation représentée, ces deux encoches de préhension 20 s'étendent à un même niveau, sensiblement à mi-hauteur de la surface latérale 13, et elles sont identiques l'une à l'autre.

Préférentiellement, également, et pour des raisons qui apparaîtront ci-après, elles ont la forme suivante :

Tout d'abord, transversalement par rapport à l'axe A₁ de l'ensemble, leur fond 21 est, dans la forme de réalisation représentée, globalement concave.

Par exemple, et tel que représenté, ce fond 21 s'étend suivant un arc de cercle, et, préférentiellement, il est cylindrique, avec une génératrice parallèle à l'axe A₁ de l'ensemble.

Corollairement, dans la forme de réalisation représentée, parallèlement à l'axe A₁ de l'ensemble, les encoches de préhension 20 vont en s'évasant de leur fond 21 à leur débouché 22, de manière sensiblement symétrique de part et d'autre du fond 21.

En pratique, les deux encoches de préhension 20 s'étendent aux extrémités du diamètre de l'outil de finissage 10 suivant lequel s'étendent par ailleurs les ergots 18.

Préférentiellement, et cela est le cas dans la forme de réalisation représentée, l'outil de finissage 10 suivant l'invention comporte, en outre, en saillie sur la surface supérieure 14 de son bloc de travail 11, à distance de l'embout de support 15, au moins un téton 24.

Par exemple, et tel que représenté, il comporte, en positions diamétralement opposées l'un par rapport à l'autre, deux tétons 24, et ceux-ci sont disposés en croix par rapport aux ergots 18, et, donc, en croix par rapport aux encoches de préhension 20.

Dans la forme de réalisation représentée, les tétons 24 s'étendent sensiblement à mi-distance entre la surface latérale 16 de l'embout de support 15 et la surface latérale 13 du bloc de travail 11, et ils sont identiques l'un à l'autre.

Préférentiellement, et cela est le cas dans la forme de réalisation représentée, ils ont une tête 25 effilée.

Par exemple, et tel que représenté, cette tête 25 est effilée en tronc de cône.

Dans la forme de réalisation représentée, les tétons 24 comportent, en outre, un corps 26 cylindrique, et, en retrait par rapport à celui-ci, une queue 27, qui est également cylindrique, et par laquelle ils sont chacun respectivement engagés à force dans un perçage 28 prévu à cet effet en creux sur la surface supérieure 14 du bloc de travail 11, figure 3.

Sur la figure 5 a été schématisé un îlot de traitement 30 auquel sont susceptibles d'intervenir divers outils de finissage 10 suivant l'invention.

Cet îlot de traitement 30 ne sera pas décrit dans tous ses détails ici.

Seuls en seront décrits les éléments nécessaires à la compréhension de la mise en oeuvre d'un outil de finissage 10 suivant l'invention.

Il suffira d'indiquer à ce sujet que cet îlot de traitement 30 est desservi par un convoyeur 31, à la faveur duquel cheminent des plateaux 32 porteurs chacun d'au moins un verre semi-fini 33 à travailler, et que, dans la forme de réalisation représentée, il comporte, répartis circulairement autour d'un axe A₂, plusieurs postes de traitement 34, avec, pour la desserte de ceux-ci, divers équipements propres à la mise en oeuvre d'un outil de finissage 10 suivant l'invention, à savoir, au moins un râtelier de stockage 35, un dispositif de transfert 36, et un dispositif d'entraînement 38.

Par exemple, plusieurs râteliers de stockage 35 sont prévus, en étant répartis autour de l'axe A₂.

Chacun d'eux comporte, en porte à faux, au moins un flasque 40, ce flasque 40 présentant lui-même, le long de son bord libre 41, au moins une échancrure 42 dont les bords latéraux 43 sont écartés l'un de l'autre d'une distance D₄ qui, au moins localement, est comprise entre, d'une part, la distance D₁ séparant l'une de l'autre les extrémités des ergots 18 de l'embout de support 15 d'un outil de finissage 10 suivant l'invention, et, d'autre part, la dimension transversale D₂ correspondante de cet embout de support 15.

En pratique, les bords latéraux 43 de l'échancrure 42 sont parallèles l'un à l'autre.

Préférentiellement, et cela est le cas dans la forme de réalisation représentée, le râtelier de stockage 35 comporte, en outre, au-dessus de son flasque 40, deux lamelles de ressort 44, qui encadrent l'échancrure 42 de ce flasque 40, et qui, à compter d'une zone d'enracinement 45 par laquelle elles sont solidaires de ce flasque 40, s'étendent librement en direction du bord libre 41 de celui-ci.

Dans la forme de réalisation représentée, ces deux lamelles de ressort 44 présentent, chacune, localement, en regard l'une de l'autre, une déformation en demi-onde 46, dont la concavité est tournée vers le flasque 40, et, à compter de cette déformation en demi-onde 46, leur extrémité libre 47 est relevée en oblique, en s'écartant du flasque 40 au fur et à mesure qu'elle s'éloigne de cette déformation en demi-onde 46, et, donc, au fur et à mesure qu'elle se rapproche du bord libre 41 du flasque 40.

Préférentiellement, et cela est le cas dans la forme de réalisation représentée, tel que schématisé sur la figure 5, le flasque 40 comporte une pluralité d'échancrures 42, établies, de place en place, suivant un pas régulier, le long de son bord libre 41, et les lamelles de ressort 44 associées aux diverses échancrures 42 que comporte ainsi un tel flasque 40 appartiennent à une seule et même pièce 48.

Par exemple, et tel que représenté, cette pièce 48 comporte une bande 49, qui court sur toute la longueur du flasque 40, et qui, solidarisée de place en place à celui-ci par des moyens de fixation 50, forme, localement, par elle-même, les zones d'enracinement 45 des lamelles de ressort 44.

Dans la forme de réalisation représentée, le bord libre 41 du flasque 40 est abattu, longitudinalement, par un chanfrein 51, et, au débouché de chacune des échancrures 42, il est conjointement abattu, transversalement, par des chanfreins 52.

Enfin, dans la forme de réalisation représentée, le flasque 40 forme l'une des ailes d'une cornière 54 qui, par son autre aile 55, est rapportée sur un bâti 56 par des moyens de fixation 57 intervenant de place en place sur sa longueur.

Préférentiellement, et cela est le cas dans la forme de réalisation représentée, le bâti 56 porte, ainsi, échelonnés sur sa hauteur, plusieurs cornières 54, et, donc, plusieurs flasques 40.

Ainsi qu'il est aisé de le comprendre, le râtelier de stockage 35 ainsi constitué est apte à recevoir un outil de finissage 10 suivant l'invention dans chacune de ses échancrures 42.

Tel que schématisé par une flèche F₁ sur la figure 8, il suffit en effet d'engager par son embout de support 15 cet outil de finissage 10 entre les bords latéraux 43 d'une telle échancrure 42, en présentant les ergots 18 de cet embout de support 15 au-dessus du flasque 40 et suivant une orientation pour laquelle ils s'étendent sensiblement transversalement par rapport aux bords latéraux 43 de l'échancrure 42.

Avec un tel engagement, les ergots 18 viennent d'eux-mêmes se prendre sous les lamelles de ressort 44, et, une fois arrivés au droit de la déformation en demi-onde 46 de celles-ci, ils suffisent à une retenue convenable, mais réversible, de l'outil de finissage 10 sur le flasque 40.

Le dégagement de cet outil de finissage 10 de ce flasque 40 se fait suivant un processus inverse.

Les opérations d'engagement et de dégagement précédentes peuvent se faire manuellement.

Mais elles peuvent être également assurées de manière automatique par le dispositif de transfert 36 prévu à cet effet.

Ce dispositif de transfert 36 ne sera pas décrit dans tous ses détails ici.

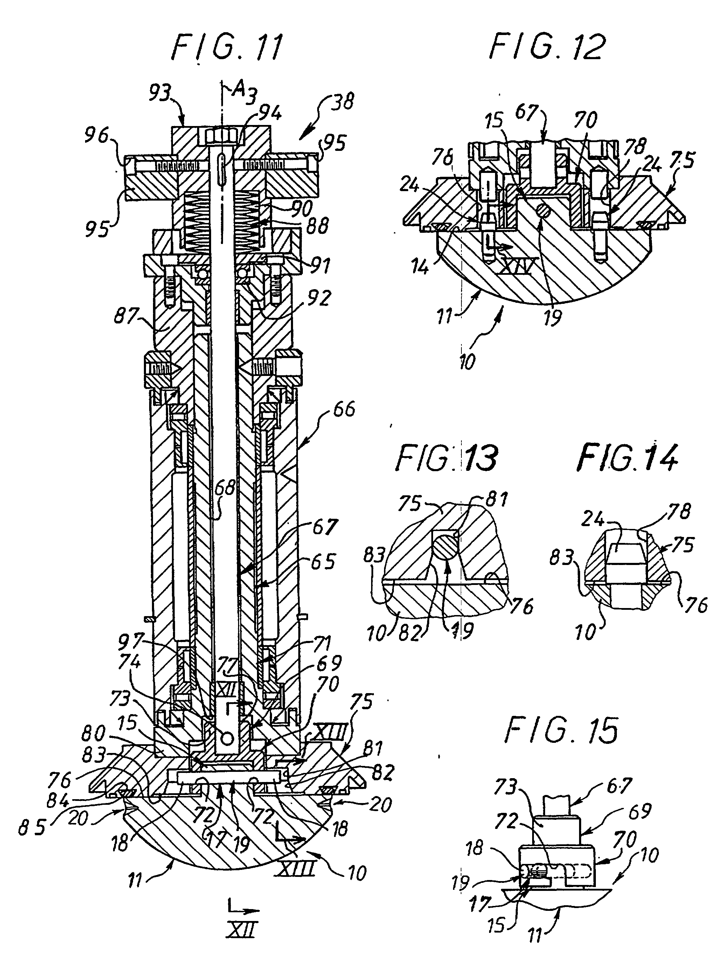

Il suffira d'indiquer que, ainsi qu'il est mieux visible sur les figures 9 et 10, il comporte, globalement, deux doigts 59 par lesquels il est propre à la saisie d'un outil de finissage 10 suivant l'invention.

En pratique, ces doigts 59 sont propres à coopérer en engagement avec les encoches de préhension 20 que comporte le bloc de travail 11 d'un tel outil de finissage 10.

Pour ce faire, ils comportent, chacun, en vis-à-vis, en saillie sur leur bord interne, un bossage 60 dont la configuration est complémentaire de celle de ces encoches de préhension 20, tant longitudinalement que transversalement.

Dans la forme de réalisation représentée, les deux doigts 59 s'étendent sensiblement parallèlement l'un à l'autre, et, tel que schématisé par la double flèche F₂ sur la figure 10, ils sont montés mobiles en translation l'un par rapport à l'autre.

Par exemple, et tel que représenté, ils sont, pour ce faire, chacun respectivement solidaires d'un coulisseau 61 monté mobile dans une coulisse 62 prévue transversalement à cet effet sur un bloc de support 63 commun à l'ensemble.

Pour le reste, les dispositions ne relèvent pas de la présente invention.

Quoi qu'il en soit, et ainsi qu'il est aisé de le comprendre, la forme des encoches de préhension 20 de l'outil de finissage 10 facilite la saisie de celui-ci, car, par leur concavité et par leur évasement, elles permettent que cette saisie se fasse sans que le positionnement des doigts 59 du dispositif de transfert 36 par rapport à cet outil de finissage 10 soit nécessairement très précis.

En outre, elle conduit à un maintien sûr et satisfaisant de l'outil de finissage 10 dans toutes les directions.

Dans la forme de réalisation représentée, le dispositif de transfert 36, quant à lui, est soutenu par un bras 64 monté rotatif autour de l'axe A₂.

De manière connue en soi, le dispositif d'entraînement 38 comporte une broche 65 montée rotative dans une douille fixe 66.

Suivant l'invention, il comporte, également, une tige d'attelage 67, qui, disposée coaxialement dans la broche 65, à la faveur d'un alésage axial 68 de celle-ci, est montée mobile dans cette broche 65, et qui est équipée, à son extrémité libre, de moyens d'intervention 69 complémentaires des moyens d'intervention 17 que comporte l'embout de support 15 de l'outil de finissage 10 suivant l'invention.

En pratique, l'extrémité libre de la tige d'attelage 67 intervient du côté de l'extrémité inférieure de la broche 65.

Lorsque, comme représenté, les moyens d'intervention 17 que comporte l'embout de support 15 de l'outil de finissage 10 suivant l'invention sont constitués par deux ergots 18, les moyens d'intervention 69 équipant la tige d'attelage 67 du dispositif d'entraînement 38 sont, comme également représenté, constitués par une pièce d'attelage 70, en forme de cloche, par laquelle cette tige d'attelage 67 est adaptée à être engagée sur l'embout de support 15 d'un tel outil de finissage 10, et qui présente, latéralement, des rainures en baïonnette 72, pour coopération avec les ergots 18 que comporte cet embout de support 15.

Par exemple, et tel que représenté, la pièce d'attelage 70 présente, en saillie sur sa surface supérieure, un embout tubulaire 73 par lequel elle est rapportée sur la tige d'attelage 67, en étant dûment solidarisée à celle-ci, par exemple par une goupille 74.

Dans la forme de réalisation représentée, l'outil de finissage 10 suivant l'invention comportant, en saillie sur sa surface supérieure 14, des tétons 24, le dispositif d'entraînement 38 comporte, également, une pièce d'entraînement 75, qui est solidaire en rotation de la broche 65, à l'extrémité inférieure de celle-ci, et qui, pour coopération en engagement avec un tel outil de finissage 10, comporte, en creux sur une surface d'appui 76 perpendiculaire à l'axe A₃ de l'ensemble, autant de perçages 78 que cet outil de finissage 10 comporte de tétons 24.

Dans la forme de réalisation représentée, la pièce d'entraînement 75 comporte donc deux perçages 78, qui, disposés suivant un même diamètre de cette pièce d'entraînement 75, s'étendent chacun respectivement de part et d'autre de l'axe A₃ de l'ensemble.

Préférentiellement, et cela est le cas dans la forme de réalisation représentée, ces perçages 78 sont allongés en boutonnière suivant le diamètre suivant lequel ils sont implantés.

Mais leur largeur est sensiblement égale au diamètre des tétons 24 de l'outil de finissage 10, tout en étant légèrement supérieure à ce diamètre.

Dans la forme de réalisation représentée, la pièce d'entraînement 75 est rapportée, par exemple à l'aide de vis non visibles sur les figures, sur un épanouissement 80 de la broche 65 prévu à cet effet à l'extrémité inférieure de celle-ci.

Dans la forme de réalisation représentée, la pièce d'entraînement 75 est en outre une pièce annulaire, qui entoure la pièce d'attelage 70, et la surface d'appui 76 qu'elle présente forme sa surface inférieure.

Pour recevoir les ergots 18 de l'embout de support 15 de l'outil de finissage 10, la pièce d'entraînement 75 présente, également, en creux sur la surface d'appui 76 qu'elle forme, une saignée 81, dont la largeur est sensiblement égale au diamètre de la goupille 19 formant ces ergots 18, tout en étant légèrement supérieure à ce diamètre, et dont la longueur est, par contre, supérieure à celle de cette goupille 19.

Préférentiellement, cette saignée 81 s'étend suivant un diamètre perpendiculaire à celui suivant lequel sont disposés les perçages 78.

Préférentiellement, également, pour faciliter l'engagement des ergots 18, elle débouche sur la surface d'appui 76 par un divergent 82.

Dans la forme de réalisation représentée, la pièce d'entraînement 75 présente, en outre, en creux sur la surface d'appui 76 qu'elle forme, un dégagement 83 dans le contour duquel s'inscrivent tant les perçages 78 que la saignée 81.

Enfin, dans la forme de réalisation représentée, la pièce d'entraînement 75 présente, en creux sur la surface d'appui 76 qu'elle forme, au-delà du dégagement 83, une saignée 84, qui s'étend annulairement, et dans laquelle est logé un joint d'étanchéité 85.

A son extrémité supérieure, la broche 65 est solidaire d'une tête 87 propre à permettre d'en assurer son entraînement en rotation, suivant des modalités qui, ne relevant pas de la présente invention, ne seront pas décrites ici.

Bien entendu, des moyens de roulement, et/ou des paliers, sont prévus, d'une part, entre la broche 65 et la douille fixe 66, et, d'autre part, entre la tige d'attelage 67 et la broche 65.

Relevant de l'homme de l'art, ces moyens de roulement et/ou ces paliers ne seront pas décrits ici.

En pratique, la tige d'attelage 67 est montée mobile dans la broche 65 tant axialement qu'en rotation.

Pour ce faire, cette tige d'attelage 67 est tout d'abord soumise à des moyens de commande 88 aptes à agir axialement sur elle.

Dans la forme de réalisation représentée, les moyens de commande 88 auxquels est ainsi soumise la tige d'attelage 67 sont des moyens élastiques qui la sollicitent en permanence en direction opposée à son extrémité libre, c'est-à-dire en direction opposée à la pièce d'attelage 70 qu'elle porte.

Par exemple, et tel que représenté, ces moyens élastiques sont constitués par un empilage de rondelles Belleville 90, et ils interviennent entre, d'une part, une rondelle 91, qui prend appui axialement sur la tête 87 de la broche 65, par l'intermédiaire d'un roulement 92, et, d'autre part, une tête 93, qui est dûment rapportée à cet effet sur la tige d'attelage 67, en étant dûment calée axialement sur celle-ci, par exemple par une goupille 94.

La tige d'attelage 67 est, corollairement, soumise à des bras de commande 95 par lesquels il est possible d'agir en rotation sur elle.

Par exemple, et tel que représenté, ces bras de commande 95 sont rapportés sur la tête 93, par exemple à l'aide de vis 96.

Bien entendu, ils peuvent être remplacés par une couronne.

Globalement, la tige d'attelage 67 est mobile axialement entre une position haute, de repos, pour laquelle, sous la sollicitation des moyens élastiques constituant ses moyens de commande 88, la pièce d'attelage 70 qu'elle porte, et, plus précisément, l'embout tubulaire 73 de celle-ci, est en butée contre un épaulement 97 prévu transversalement à cet effet sur la broche 65, à l'extrémité inférieure de cette broche 65, à l'intérieur de celle-ci, et une position basse, d'attelage, pour laquelle, ces moyens élastiques étant écrasés, la pièce d'attelage 70, alors elle-même en position basse, fait légèrement saillie au-delà de la surface d'appui 76 que forme la pièce d'entraînement 75.

Le processus de mise en oeuvre du dispositif d'entraînement peut dès lors être par exemple du type du suivant.

Initialement, par des moyens non visibles sur les figures, une force est exercée axialement sur la tête 93 de la tige d'attelage 67 pour que la pièce d'attelage 70 qu'elle porte soit en position basse.

Après avoir dûment sélectionné dans le râtelier de stockage 35 l'outil de finissage 10 à mettre en oeuvre, le dispositif de transfert 36 saisit cet outil de finissage 10 par ses doigts 59 et l'amène sous le dispositif d'entraînement 38, et, par construction, il est fait en sorte que les ergots 18 de l'embout de support 15 de cet outil de finissage 10 soient alors au droit des rainures en baïonnette 72 de la pièce d'attelage 70 du dispositif d'entraînement 38.

Le dispositif de transfert 36 engage, alors, verticalement, l'outil de finissage 10 dans la pièce d'attelage 70, par son embout de support 15.

La tige d'attelage 67 est alors commandée en rotation, pour que les ergots 18 de l'embout de support 15 de l'outil de finissage 10 arrivent circulairement en bout des rainures en baïonnette 72 de la pièce d'attelage 70.

Par l'écartement de ses doigts 59, le dispositif de transfert 36 abandonne alors l'outil de finissage 10, qui, dès lors, est simplement suspendu à la pièce d'attelage 70, et, par celle-ci, à la tige d'attelage 67, par les ergots 18 de son embout de support 15.

La force exercée jusque-là sur la tige d'attelage 67 étant relâchée, cette tige d'attelage 67 remonte axialement dans la broche 65, sous la seule sollicitation des moyens élastiques constituant les moyens de commande 88 correspondants, ce qui conduit, d'une part, les ergots 18 de l'embout de support 15 de l'outil de finissage 10 à s'engager dans la saignée 81 de la pièce d'entraînement 75, et, d'autre part, les tétons 24 de cet outil de finissage 10 à s'engager, eux-mêmes, chacun respectivement, dans les perçages 78 de cette pièce d'entraînement 75, et le mouvement se poursuit jusqu'à ce que, par sa surface supérieure 14, l'outil de finissage 10 se trouve appliqué, et serré, contre la surface d'appui 76 prévue à cet effet sur cette pièce d'entraînement 75.

Ainsi qu'il est aisé de le comprendre, les ergots 18 de l'embout de support 15 de l'outil de finissage 10 ont essentiellement deux fonctions, à savoir, d'une part, le centrage de cet outil de finissage 10 par rapport à la pièce d'entraînement 75 selon une direction perpendiculaire au diamètre suivant lequel ils s'étendent, et, d'autre part, le serrage de cet outil de finissage 10 sur cette pièce d'entraînement 75.

Accessoirement, mais seulement accessoirement, ils ont aussi pour fonction de participer à l'entraînement en rotation de l'outil de finissage 10 par la pièce d'entraînement 75 lorsque la broche 65 est elle-même entraînée en rotation.

Corollairement, les tétons 24 de l'outil de finissage 10 ont, eux-mêmes, une double fonction, à savoir, d'une part, le centrage de cet outil de finissage 10 par rapport à la pièce d'entraînement 75 selon une direction perpendiculaire au diamètre suivant lequel ils sont disposés, et, donc, selon une direction perpendiculaire à la précédente, et, d'autre part, pour l'essentiel, l'entraînement en rotation de l'outil de finissage 10 par la pièce d'entraînement 75 lorsque la broche 65 est elle-même entraînée en rotation.

Ainsi qu'il est également aisé de le comprendre, le serrage de l'outil de finissage 10 contre la pièce d'entraînement 75 est nécessaire pour que la liaison en rotation à assurer entre cet outil de finissage 10 et cette pièce d'entraînement 75 soit satisfaisante.

De ce point de vue, l'empilage de rondelles Belleville 90 formant les moyens élastiques correspondants permet avantageusement d'obtenir une charge importante dans un espace réduit.

Mais, en variante, des moyens hydrauliques 1 ou mécaniques peuvent tout aussi bien être mis en oeuvre.

Dans ce qui précède, il a été supposé que les verres semi-finis 33 à travailler étaient traités l'un après l'autre à l'îlot de traitement 30 prévu à cet effet.

II va de soi, cependant, que plusieurs verres semi-finis 33 peuvent être traités simultanément à cet îlot de traitement 30.

La présente invention ne se limite d'ailleurs pas à la forme de réalisation décrite et représentée, mais englobe toute variante d'exécution.

## Revendications

1. Outil de finissage, notamment pour lentille ophtalmique, du genre comportant, d'une part, un bloc de travail (11), qui présente, globalement, une surface inférieure (12), une surface latérale (13), et une surface supérieure (14), et, d'autre part, un embout de support (15), qui, solidaire du bloc de travail (11), fait saillie sur la surface supérieure (14) de celui-ci, en retrait par rapport à sa surface latérale (13), **caractérisé en ce que** l'embout de support (15) comporte des moyens d'intervention (17) propres à permettre la suspension de l'ensemble ou sa suspension et son attelage à un quelconque équipement, et **en ce que** les moyens d'intervention (17) que comporte l'embout de support (15) sont constitués par deux ergots (18), qui, disposés en positions diamétralement opposées l'un par rapport à l'autre, font saillie sur la surface latérale (16) de cet embout de support (15).

2. Outil de finissage suivant la revendication 1, **caractérisé en ce que** les deux ergots (18) de l'embout de support (15) sont formés par les extrémités d'une goupille (19) qui traverse de part en part cet embout de support (15).

3. Outil de finissage suivant l'une quelconque des revendications 1, 2, **caractérisé en ce qu'**il comporte en creux sur la surface latérale (13) de son bloc de travail (11), et en positions diamétralement opposées l'une par rapport à l'autre, deux encoches de préhension (20).

4. Outil de finissage suivant la revendication 3, **caractérisé en ce que** les deux encoches de préhension (20) s'étendent à même niveau.

5. Outil de finissage suivant l'une quelconque des revendications 3, 4, **caractérisé en ce que**, transversalement par rapport à l'axe (A₁) de l'ensemble, le fond (21) des encoches de préhension (20) est globalement concave.

6. Outil de finissage suivant la revendication 5, **caractérisé en ce que** le fond (21) des encoches de préhension (20) s'étend suivant un arc de cercle.

7. Outil de finissage suivant l'une quelconque des revendications 3 à 6, **caractérisé en ce que** le fond (21) des encoches de préhension (20) est cylindrique, avec une génératrice parallèle à l'axe (A₁) de l'ensemble.

8. Outil de finissage suivant l'une quelconque des revendications 3 à 7, **caractérisé en ce que**, parallèlement à l'axe (A₁) de l'ensemble, les encoches de préhension (20) vont en s'évasant de leur fond (21) à leur débouché (22).

9. Outil de finissage suivant l'une quelconque des revendications 3 à 8, **caractérisé en ce que** les deux encoches de préhension (20) du bloc de travail (11) sont identiques l'une à l'autre.

10. Outil de finissage suivant la revendication 3, **caractérisé en ce que** les deux encoches de préhension (20) s'étendent aux extrémités du diamètre suivant lequel s'étendent les ergots (18).

11. Outil de finissage suivant l'une quelconque des revendications 1 à 10, **caractérisé en ce qu'**il comporte, en saillie sur la surface supérieure (14) de son bloc de travail (11), à distance de l'embout de support (15), au moins un téton (24).

12. Outil de finissage suivant la revendication 11, **caractérisé en ce que** le téton (24) a une tête (25) effilée.

13. Outil de finissage suivant l'une quelconque des revendications 11, 12, **caractérisé en ce qu'**il comporte, en positions diamétralement opposées l'un par rapport à l'autre, deux tétons (24).

14. Outil de finissage suivant la revendication 13, prises conjointement, **caractérisé en ce que** les tétons (24) sont disposés en croix par rapport aux ergots (18).

15. Dispositif comportant un outil de finissage suivant la revendication 1 et un équipement pour la mise en oeuvre de cet outil, **caractérisé en ce que**, s'agissant d'un râtelier de stockage (35), cet équipement comporte, en porte à faux, au moins un flasque (40), ce flasque (40) présentant au moins une échancrure (42) dont les bords latéraux (43) sont écartés l'un de l'autre d'une distance (D₄) qui, au moins localement, est, d'une part, inférieure à la distance (D₁) séparant l'une de l'autre les extrémités des ergots (18) de l'embout de support (15) dudit outil de finissage (10), et, d'autre part, supérieure à la dimension transversale (D₂) correspondante de cet embout de support (15).

16. Dispositif suivant la revendication 15, **caractérisé en ce qu'**il comporte, en outre, au-dessus de son flasque (40), deux lamelles de ressort (44), qui encadrent l'échancrure (42) de ce flasque (40), et qui, à compter d'une zone d'enracinement (45) par laquelle elles sont solidaires de ce flasque (40), s'étendent librement en direction du bord libre (41) de celui-ci.

17. Dispositif suivant la revendication 16, **caractérisé en ce que** les deux lamelles de ressort (44) présentent, chacune, localement, une déformation en demi-onde (46), dont la concavité est tournée vers le flasque (40), et leur extrémité libre (47) est relevée en oblique, en s'écartant du flasque (40) au fur et à mesure qu'elle s'éloigne de cette déformation en demi-onde (46).

18. Dispositif suivant l'une quelconque des revendications 15 à 17, **caractérisé en ce que** les bords latéraux (43) de l'échancrure (42) sont parallèles l'un à l'autre.

19. Dispositif suivant l'une quelconque des revendications 15 à 18, **caractérisé en ce que** le flasque (40) comporte une pluralité d'échancrures (42), établies, de place en place, le long de son bord libre (41).

20. Dispositif suivant les revendications 16 et 19, prises conjointement, **caractérisé en ce que** les lamelles de ressort (44) associées aux diverses échancrures (42) du flasque (40) appartiennent à une seule et même pièce (48).

21. Dispositif suivant l'une quelconque des revendications 15 à 20, **caractérisé en ce que** le bord libre (41) du flasque (40) est abattu, longitudinalement, par un chanfrein (51), et, transversalement, au débouché de chacune des échancrures (42), par des chanfreins (52).

22. Dispositif suivant l'une quelconque des revendications 15 à 21, **caractérisé en ce que** le flasque (40) forme l'une des ailes d'une cornière (54) qui, par son autre aile (55), est rapportée sur un bâti (56).

23. Dispositif comportant un outil de finissage suivant l'une quelconque des revendications 1 à 14 et un équipement pour la mise en oeuvre de cet outil, **caractérisé en ce que**, s'agissant d'un dispositif de transfert (36), cet équipement comporte deux doigts (59) par lesquels il est propre à la saisie dudit outil de finissage (10).

24. Dispositif suivant la revendication 23, **caractérisé en ce que**, l'outil de finissage (10) étant conforme à la revendication 3, les doigts (59) sont propres à coopérer en engagement avec les encoches de préhension (20) que comporte le bloc de travail (11) de cet outil de finissage (10).

25. Dispositif suivant l'une quelconque des revendications 23, 24, **caractérisé en ce que** les deux doigts (59) sont montés mobiles l'un par rapport à l'autre.

26. Dispositif suivant la revendication 25, **caractérisé en ce que** les deux doigts (59) sont mobiles en translation l'un par rapport à l'autre.

27. Dispositif suivant l'une quelconque des revendications 24 à 26, **caractérisé en ce que** les deux doigts (59) comportent, chacun, en vis-à-vis, en saillie sur leur bord interne, un bossage (60) dont la configuration est globalement complémentaire de celle des encoches de préhension (20) que comporte le bloc de travail (11) dudit outil de finissage (10).

28. Dispositif comportant un outil de finissage suivant l'une quelconque des revendications 1 à 14 et un équipement pour la mise en oeuvre de cet outil, **caractérisé en ce que**, s'agissant d'un dispositif d'entraînement (38) comportant une broche (65) montée rotative, ledit équipement comporte, également, une tige d'attelage (67), qui, disposée coaxialement dans la broche (65), à la faveur d'un alésage axial (68) de celle-ci, est montée mobile dans cette broche (65), et qui est équipée, à son extrémité libre, de moyens d'intervention (69) complémentaires des moyens d'intervention (17) que comporte l'embout de support (15) dudit outil de finissage (10).

29. Dispositif suivant la revendication 28, **caractérisé en ce que** les moyens d'intervention (69) équipant la tige d'attelage (67) sont constitués par une pièce d'attelage (70), en forme de cloche, par laquelle cette tige d'attelage (67) est adaptée à être engagée sur l'embout de support (15) dudit outil de finissage (10), et qui présente, latéralement, des rainures en baïonnette (72) pour coopération avec les ergots (18) que comporte cet embout de support (15).

30. Dispositif suivant l'une quelconque des revendications 28, 29, **caractérisé en ce que**, l'outil de finissage (10) étant conforme à la revendication 11, il comporte, également, une pièce d'entraînement (75), qui est solidaire en rotation de la broche (65), et qui, pour coopération en engagement avec ledit outil de finissage (10), comporte, en creux sur une surface d'appui (76) perpendiculaire à l'axe (A₃) de l'ensemble, autant de perçages (78) que cet outil de finissage (10) comporte de tétons (24).

31. Dispositif suivant l'une quelconque des revendications 28 à 30, **caractérisé en ce que** la tige d'attelage (67) est soumise à des moyens de commande (88) aptes à agir axialement sur elle.

32. Dispositif suivant la revendication 31, **caractérisé en ce que** les moyens de commande (88) auxquels est soumise la tige d'attelage (67) sont des moyens élastiques qui la sollicitent en permanence en direction opposée à son extrémité libre.

## Patentansprüche

1. Endbearbeitungswerkzeug, insbesondere für eine ophthalmische Linse, vom Typ, umfassend, einerseits einen Arbeitsklotz (11), der generell aufweist eine untere Fläche (12), eine Lateralfläche (13) und eine obere Fläche (14), sowie andererseits einen Stützansatz 15, der verbunden mit dem Arbeitsklotz (11) an der oberen Fläche (14) davon vorspringt, und zwar rückspringend mit Bezug auf dessen Lateralfläche (13), **dadurch gekennzeichnet, dass** der Stützansatz (15) eine Eingriffseinrichtung (17) umfasst, geeignet um eine Aufhängung der Anordnung oder dessen Aufhängung und Kopplung mit einer beliebigen Ausstattung zu ermöglichen, und dass die Eingriffseinrichtung (17), die der Stützansatz (15) umfasst, gebildet ist mittels zweier Zapfen (18), die bei diametral gegenüberstehenden Positionen mit Bezug zueinander angeordnet an der Lateralfläche (16) des Stützansatzes (15) vorspringen.

2. Endbearbeitungswerkzeug nach Anspruch 1, **dadurch gekennzeichnet, dass** die zwei Zapfen (18) des Stützansatzes (15) gebildet sind, durch Enden eines Stiftes oder Splintes (19), der beidseitig den Stützansatz (15) durchquert.

3. Endbearbeitungswerkzeug nach einem der Ansprüche 1, 2, **dadurch gekennzeichnet, dass** es rückspringend an der Lateralfläche (13) des Arbeitsklotzes (11) bei diametral einander gegenüberstehenden Positionen mit Bezug zueinander zwei Vorspannkerben (20) umfasst.

4. Endbearbeitungswerkzeug nach Anspruch 3, **dadurch gekennzeichnet, dass** die zwei Vorspannkerben (20) sich auf dem selben Niveau erstrecken.

5. Endbearbeitungswerkzeug nach einem der Ansprüche 3, 4, **dadurch gekennzeichnet, dass** transversalwärts in Bezug auf die Achse (A₁) der Anordnung der Boden (21) der Vorspannkerben (20) generell konkav ist.

6. Endbearbeitungswerkzeug nach Anspruch 5, **dadurch gekennzeichnet, dass** der Boden (21) der Vorspannkerben (20) sich gemäß einem Kreisbogen erstreckt.

7. Endbearbeitungswerkzeug nach einem der Ansprüche 3 bis 6, **dadurch gekennzeichnet, dass** der Boden (21) der Vorspannkerben (20) zylindrisch ausgebildet ist, wobei Erzeugende parallel zur Achse (A,) der Anordnung verlaufen.

8. Endbearbeitungswerkzeug nach einem der Ansprüche 3 bis 7, **dadurch gekennzeichnet, dass** die Vorspannkerben (20) unter Aufweitung Ihres Bodens (21) zu Ihrer Mündung (22) parallel zur Achse (A₁) der Anordnung verlaufen.

9. Endbearbeitungswerkzeug nach einem der Ansprüche 3 bis 8, **dadurch gekennzeichnet, dass** die zwei Vorspannkerben (20) des Arbeitsklotzes (11) identisch mit Bezug zueinander vorliegen.

10. Endbearbeitungswerkzeug nach Anspruch 3, **dadurch gekennzeichnet, dass** die zwei Vorspannkerben (20) sich an Enden des Durchmessers erstrecken, gemäß welchem sich die Zapfen (18) erstrecken.

11. Endbearbeitungswerkzeug nach einem der Ansprüche 1 bis 10, **dadurch gekennzeichnet, dass** es, vorspringend an der oberen Fläche (14) seines Arbeitsklotzes (11) unter Abstand des Stützansatzes (15) zumindest einen Zapfen (24) umfasst.

12. Endbearbeitungswerkzeug nach Anspruch 11, **dadurch gekennzeichnet, dass** der Zapfen (24) über einen sich verjüngenden Kopf (25) verfügt.

13. Endbearbeitungswerkzeug nach einem der Ansprüche 11, 12, **dadurch gekennzeichnet, dass** es bei diametral mit Bezug zueinander gegenüberliegenden Positionen zwei Zapfen (24) umfasst.

14. Endbearbeitungswerkzeug nach Anspruch 13, **dadurch gekennzeichnet, dass** die Zapfen (24) unter Ausbildung eines Kreuzes mit Bezug auf die Zapfen (18) angeordnet sind.

15. Vorrichtung, umfassend ein Endbearbeitungswerkzeug nach Anspruch 1 und eine Ausstattung zum Einsetzen des Werkzeugs, **dadurch gekennzeichnet, dass** es sich um ein Lagergestell (35) handelt, wobei die Ausstattung vorstehend zumindest einen Flansch (40) umfasst, wobei der Flansch (40) zumindest eine Aussparung (42) aufweist, deren Lateralränder (43) mit Bezug zueinander beabstandet sind, um eine Entfernung (D₄), die zumindest lokal einerseits kleiner ist als der Abstand (D₁), der das eine von dem anderen der Enden der Zapfen (18) des Stützansatzes (15) des Endbearbeitungswerkzeuges (10) trennt, und andererseits größer ist, als die transversale Abmessung (D₂), entsprechend dem Stützansatz (15).

16. Vorrichtung nach Anspruch 15, **dadurch gekennzeichnet, dass** sie ferner umfasst, oberhalb des Flansches (40) zwei Federlamellen (44), die die Aussparung (42) des Flansches (40) umgeben und die ausgehend von einer Befestigungszone (45), mittels welcher sie mit dem Flansch (40) verbunden sind, sich frei in Richtung des freien Randes (41) davon erstrecken.

17. Vorrichtung nach Anspruch 16, **dadurch gekennzeichnet, dass** die zwei Federlamellen (44) jeweils lokal über eine Halbwellenverformung (46) verfügen, deren Krümmung oder Konkavität hin zu dem Flansch (40) gerichtet ist, wobei das freie Ende (47) schräg ansteigend ist, unter stärkerer Beabstandung des Flansches (40) in dem Ausmaß wie die Entfernung von der Halbwellenverformung (46) zunimmt.

18. Vorrichtung nach einem der Ansprüche 15 bis 17, **dadurch gekennzeichnet, dass** die Lateralwände (43) der Aussparung (42) parallel zueinander sind.

19. Vorrichtung nach einem der Ansprüche 15 bis 18, **dadurch gekennzeichnet, dass** der Flansch (40) eine Vielzahl an Aussparungen (42) umfasst, ausgebildet von Ort zu Ort entlang des freien Randes (41).

20. Vorrichtung nach Anspruch 16 und 19, gemeinsam, **dadurch gekennzeichnet, dass** die Federlamellen (44), die den unterschiedlichen Aussparungen (42) des Flansches (40) zugeordnet sind, zu ein und demselben Teil (48) gehören.

21. Vorrichtung nach einem der Ansprüche 15 bis 20, **dadurch gekennzeichnet, dass** der freie Rand (41) des Flansches (40) in Längsrichtung umgeschlagen oder entgratet ist durch eine Abschrägung (51) und transversalwärts an den Mündungen von jeder der Aussparungen (42) durch Abschrägungen (52).

22. Vorrichtung nach einem der Ansprüche 15 bis 21, **dadurch gekennzeichnet, dass** der Flansch (40) einen der Flügel eines Winkelprofils (54) bildet, welches mit dem anderen Flügel (55) an einem Gestell (56) befestigt ist.

23. Vorrichtung umfassend ein Endbearbeitungswerkzeug nach einem der Ansprüche 1 bis 14, sowie eine Ausstattung zur Verwendung dieses Werkzeuges, **dadurch gekennzeichnet, dass** es sich um eine Übertragungs- oder Transportvorrichtung (36) handelt, wobei die Ausstattung zwei Finger (59) umfasst, mittels welcher ein Ergreifen bzw. Erfassen des Endbearbeitungswerkzeuges (10) ermöglicht ist.

24. Vorrichtung nach Anspruch 23, **dadurch gekennzeichnet, dass** das Endbearbeitungswerkzeug (10) dem Anspruch 3 genügt, wobei die Finger (59) geeignet sind zur Wechselwirkung mittels Eingriff bezüglich der Vorspannkerben (20), die der Arbeitsklotz (11) des Endbearbeitungswerkzeugs umfasst.

25. Vorrichtung nach einem der Ansprüche 23, 24, **dadurch gekennzeichnet, dass** die zwei Finger (59) beweglich mit Bezug zueinander montiert sind.

26. Vorrichtung nach Anspruch 25, **dadurch gekennzeichnet, dass** die zwei Finger (59) translatorisch mit Bezug zueinander beweglich sind.

27. Vorrichtung nach einem der Ansprüche 24 bis 26, **dadurch gekennzeichnet, dass** die zwei Finger (59) jeweils gegenüberstehend, vorspringend an ihren Innenrand über einen Höcker (60) verfügen, dessen Konfiguration generell komplementär ist, mit Bezug auf die Vorspannkerben (20), die der Arbeitsklotz (11) des Endbearbeitungswerkzeugs (10) umfasst.

28. Vorrichtung, umfassend ein Endbearbeitungswerkzeug nach einem der Ansprüche 1 bis 14, sowie eine Ausstattung zum Einsatz des Werkzeugs, **dadurch gekennzeichnet, dass** es sich um eine Antriebseinrichtung (38) handelt, die eine Spindel (56) umfasst, drehbar montiert, wobei die Ausstattung ebenfalls einen Kupplungsschaft (57) umfasst, der koaxial in der Spindel (56) angeordnet ist, und zwar mittels einer axialen Bohrung (68) davon, beweglich montiert in der Spindel (56), wobei das freie Ende davon mit einer Eingriffseinrichtung (56) ausgestattet ist, komplementär zur Eingriffseinrichtung (17), die der Stützansatz (15) des Endbearbeitungswerkzeugs (10) umfasst.

29. Vorrichtung nach Anspruch 28, **dadurch gekennzeichnet, dass** die Eingriffseinrichtung (69), die den Kupplungsschaft (67) ausstattet, gebildet ist durch ein Kupplungsteil (70) in Glockenform, mittels welchem der Kupplungsschaft (67) in der Lage ist in Eingriff zu treten mit dem Stützansatz (15) des Endbearbeitungswerkzeugs (10), wobei laterale Bajonettrillen (72) vorgesehen sind, zur Wechselwirkung mit Zapfen (18), die der Stützansatz (15) umfasst.

30. Vorrichtung nach einem der Ansprüche 28, 29, **dadurch gekennzeichnet, dass** das Endberarbeitungswerkzeug (10) dem Anspruch 11 genügt, wobei ebenfalls ein Antriebsteil (75) vorgesehen ist, welches drehfest mit der Spindel (65) vorliegt und welches zur Wechselwirkung in Eingriff mit dem Endbearbeitungswerkzeug (10) rückspringend an einer Anlagefläche (76), senkrecht zur Achse (A₃) der Anordnung entsprechend viele Bohrungen (78) umfasst, wie das Endbearbeitungswerkzeug (10) Zapfen (24) aufweist.

31. Vorrichtung nach einem der Ansprüche 28 bis 30, **dadurch gekennzeichnet, dass** der Kupplungsschaft (67) einer Steuereinrichtung (88) unterliegt, geeignet zur axialen Einwirkung diesbezüglich.

32. Vorrichtung nach Anspruch 31, **dadurch gekennzeichnet, dass** die Steuereinrichtung (88), der der Kupplungsschaft (67) unterliegt, eine elastische Einrichtung ist, die permanent in einer Richtung entgegengesetzt zu dem freien Ende eine Beaufschlagung bereitstellt.

## Claims

1. A finishing tool, in particular for an ophthalmic lens, of the kind comprising on the one hand a working block (11) which has overall a lower surface (12), a lateral surface (13) and an upper surface (14) and on the other hand a support connecting portion (15) which, being fixed with respect to the working block (11), projects on the upper surface (14) thereof, in set-back relationship with respect to its lateral surface (13), **characterised in that** the support connecting portion (15) comprises operational means (17) for permitting suspension of the assembly or suspension thereof and coupling thereof to any item of equipment, and that the operational means (17) that the support connecting portion (15) comprises are formed by two lugs (18) which, disposed in diametrally mutually opposite positions, project on the lateral surface (16) of said support connecting portion (15).

2. A finishing tool according to claim 1 **characterised in that** the two lugs (18) of the support connecting portion (15) are formed by the ends of a pin (19) which passes through said support connecting portion (15).

3. A finishing tool according to either one of claims 1 and 2 **characterised in that** it comprises two gripping notches (20) in recessed relationship on the lateral surface (13) of its working block (11) and at diametrally mutually opposite positions.

4. A finishing tool according to claim 3 **characterised in that** the two gripping notches (20) extend at the same level.

5. A finishing tool according to either one of claims 3 and 4 **characterised in that** transversely with respect to the axis (A₁) of the assembly the bottom (21) of the gripping notches (20) is generally concave.

6. A finishing tool according to claim 5 **characterised in that** the bottom (21) of the gripping notches (20) extends along a circular arc.

7. A finishing tool according to any one of claims 3 to 6 **characterised in that** the bottom (21) of the gripping notches (20) is cylindrical with a generatrix parallel to the axis (A₁) of the assembly.

8. A finishing tool according to any one of claims 3 to 7 **characterised in that**, parallel to the axis (A₁) of the assembly, the gripping notches (20) flare from their bottom (21) to their mouth opening (22).

9. A finishing tool according to any one of claims 3 to 8 **characterised in that** the two gripping notches (20) of the working block (11) are identical to each other.

10. A finishing tool according to claim 3 **characterised in that** the two gripping notches (20) extend at the ends of the diameter along which the lugs (18) extend.

11. A finishing tool according to any one of claims 1 to 10 **characterised in that** it comprises at least one stud (24) in projecting relationship on the upper surface (14) of its working block (11) at a spacing from the support connecting portion (15).

12. A finishing tool according to claim 11 **characterised in that** the stud (24) has a tapering head (25).

13. A finishing tool according to either one of claims 11 and 12 **characterised in that** it comprises two studs (24) at diametrally mutually opposite positions.

14. A finishing tool according to claim 13 **characterised in that** the studs (24) are disposed in crossed relationship with respect to the lugs (18).

15. A device comprising a finishing tool according to claim 1 and an item of equipment for using said tool **characterised in that**, involving a storage rack (35), said item of equipment comprises in cantilever relationship at least one plate (40) which has at least one cut-out (42) whose lateral edges (43) are spaced from each other by a distance (D₄) which at least locally is on the one hand less than the distance (D₁) separating the ends of the lugs (18) of the support connecting portion (15) of said finishing tool (10) from each other and on the other hand greater than the corresponding transverse dimension (D₂) of said support connecting portion (15).

16. A device according to claim 15 **characterised in that** it further comprises above said plate (40) two spring blades (44) which border the cut-out (42) of said plate (40) and which, from a root zone (45) by way of which they are fixed with respect to said plate (40), extend freely in the direction of the free edge (41) thereof.

17. A device according to claim 16 **characterised in that** the two spring blades (44) each locally have a half-wave deformation (46) whose concavity faces towards the plate (40) and their free end (47) is raised inclinedly, extending away from the plate (40) as it goes away from said half-wave deformation (46).

18. A device according to any one of claims 15 to 17 **characterised in that** the lateral edges (43) of the cut-out (42) are parallel to each other.

19. A device according to any one of claims 15 to 18 **characterised in that** the plate (40) comprises a plurality of cut-outs (42) disposed at spaced locations along its free edge (41).

20. A device according to claims 16 and 19 in combination **characterised in that** the spring blades (44) associated with the various cut-outs (42) of the plate (40) belong to one and the same component (48).

21. A device according to any one of claims 15 to 20 **characterised in that** the free edge (41) of the plate (40) is angled longitudinally by a chamfer (51) and transversely, at the mouth opening of each of the cut-outs (42), by chamfers (52).

22. A device according to any one of claims 15 to 21 **characterised in that** the plate (40) forms one of the limbs of an angle member (54) which is fitted by its other limb (55) to a frame (56).

23. A device comprising a finishing tool according to any one of claims 1 to 14 and an item of equipment for using said tool **characterised in that**, involving a transfer device (36), said item of equipment comprises two fingers (59), by way of which it is capable of holding said finishing tool (10).

24. A device according to claim 23 **characterised in that**, the finishing tool (10) being in accordance with claim 3, the fingers (59) are capable of engagingly co-operating with the gripping notches (20) that the working block (11) of said finishing tool (10) comprises.

25. A device according to either one of claims 23 and 24 **characterised in that** the two fingers (59) are mounted movably with respect to each other.

26. A device according to claim 25 **characterised in that** the two fingers (59) are movable with a translatory movement with respect to each other.

27. A device according to any one of claims 24 to 26 **characterised in that** the two fingers (59) each comprise in mutually facing relationship projecting on their inward edge a boss (60) whose configuration is generally complementary to that of the gripping notches (20) that the working block (11) of said finishing tool (10) comprises.

28. A device comprising a finishing tool according to any one of claims 1 to 14 and an item of equipment for using said tool, **characterised in that**, involving a drive device (38) comprising a rotatably mounted spindle (65), said item of equipment also comprises a coupling rod (67) which, disposed coaxially in the spindle (65), by means of an axial bore (68) therein, is mounted movably in said spindle (65) and which at its free end is equipped with operational means (69) complementary to the operational means (17) that the support connecting portion (15) of said finishing tool (10) comprises.

29. A device according to claim 28 **characterised in that** the operational means (69) on the coupling rod (67) are formed by a bell-shaped coupling portion (70), by way of which said coupling rod (67) is adapted to be engaged on the support connecting portion (15) of said finishing tool (10) and which laterally has bayonet grooves (72) for co-operating with the lugs (18) that said support connecting portion (15) comprises.

30. A device according to either one of claims 28 and 29 **characterised in that**, the finishing tool (10) being in accordance with claim 11, it also comprises a drive portion (75) which is fixed in respect of rotation to the spindle (65) and which, for engagingly co-operating with said finishing tool (10), comprises in recessed relationship on a support surface (76) perpendicular to the axis (A₃) of the assembly, as many openings (78) as said finishing tool (10) comprises studs (24).

31. A device according to any one of claims 28 to 30 **characterised in that** the coupling rod (67) is subjected to control means (88) capable of acting axially thereon.

32. A device according to claim 31 **characterised in that** the control means (88) to which the coupling rod (67) is subjected are resilient means which continuously urge it in the opposite direction to its free end.
